# FASCICULE DE BREVET EUROPEEN

(11) **EP 2 652 545 B1**
(45) Date de publication et mention de la délivrance du brevet: **12.09.2018**
(21) Numéro de dépôt: 11801792.0
(22) Date de dépôt: 29.11.2011
(51) Int. Cl.: G02C 9/00, G02C 7/10

(54) **VERRE DE LUNETTES COMPRENANT UN VERRE DE BASE ET UNE STRUCTURE MINCE**
BRILLENGLAS MIT EINEM BASISGLAS UND EINER DÜNNEN STRUKTUR
SPECTACLE LENS INCLUDING A BASE LENS AND A THIN STRUCTURE

(30) Priorité: 15.12.2010 FR 1060573
(43) Date de publication de la demande: 23.10.2013
(73) Titulaire: Essilor International, 94220 Charenton-le-Pont (FR)
(72) Inventeur: BOVET, Christian, F-94220 Charenton-le-Pont (FR); CANO, Jean-Paul, F-94220 Charenton-le-Pont (FR); FAYOLLE, Romain, F-94220 Charenton-le-Pont (FR); SAUGEY, Antony, F-94220 Charenton-le-Pont (FR)
(74) Mandataire: Cabinet Plasseraud
(86) Numéro de dépôt international: PCT/FR2011/052817
(87) Numéro de publication internationale: WO 2012/080615

(56) Documents cités:
- WO-A2-2007/108942
- DE-U1- 29 913 810
- FR-A1- 2 888 947
- GB-A- 1 154 360
- US-A- 6 009 564
- US-A1- 2006 023 322
- US-B1- 6 619 799

## Description

La présente invention concerne un verre de lunettes comprenant un verre de base et une structure mince.

Il est connu de combiner un film avec un verre de lunettes de base pour conférer au verre de lunettes résultant des propriétés et fonctions additionnelles. Ces propriétés et fonctions sont produites par le film indépendamment du verre de lunettes de base. Par exemple, le film peut avoir une fonction optique, telle qu'une fonction antireflet, une fonction mécanique, telle qu'une fonction antichoc ou antirayure, une fonction antisalissure, une fonction antistatique, etc. Eventuellement, le film peut avoir une structure mince complexe, qui est adaptée pour produire une fonction particulière. Notamment, une telle structure mince peut comporter une couche de cellules qui renferment chacune une substance active optiquement, telle qu'une substance photochrome, une substance photo-transformable ou des cristaux liquides. Dans le cadre de la présente demande de brevet, on adopte la terminologie plus générale de structure mince, aussi bien pour désigner un film éventuellement porteur de couches qu'une structure plus complexe dont les surfaces externes sont parallèles.

Une telle association d'une structure mince avec un verre de lunettes de base est différente de la réalisation d'un verre de lunettes à puissance variable sous la forme d'un réservoir à faces souples qui est rempli de liquide réfringent. Un tel verre de lunettes à puissance variable est notamment décrit dans le document WO 2004/023167. Le liquide réfringent est alors indispensable pour que la fonction dioptrique du verre soit réalisée. Mais la puissance optique d'un tel verre de lunettes n'est pas définie précisément, et l'utilisation de liquide pour l'application ophtalmique peut réduire la sécurité du porteur des lunettes. Une telle structure de verre de lunettes à puissance optique variable est en dehors de l'objet de la présente demande de brevet. Le document FR 2 888 947 A1 décrit un verre de lunettes comprenant au moins un ensemble transparent de cellules juxtaposées parallèlement à la surface du verre.

De façon connue, une structure mince peut être assemblée avec un verre de lunettes de base par collage sur l'une des faces de ce dernier, antérieure ou postérieure. Pour cela, une couche intermédiaire de matériau adhésif est disposée entre la structure mince et le verre de lunettes de base.

Mais un tel procédé d'assemblage présente les inconvénients suivants :
- le plus souvent, la structure mince est assemblée définitivement avec verre de lunettes de base sans possibilité de les séparer à nouveau ultérieurement, par exemple pour changer la structure mince ;
- lorsque la face du verre de lunettes de base est courbe, la structure mince doit être amenée à une courbure identique. Des contraintes en résultent dans la structure mince, qui peuvent la dégrader ou provoquer des délaminations de la structure mince par rapport au verre de lunettes de base ;
- un outil d'application spécifique et complexe est nécessaire pour appliquer de façon uniforme la structure mince sur le verre de lunettes de base. Cet outil est onéreux en lui-même et nécessite un opérateur expérimenté pour le mettre en oeuvre ; et
- l'application de la structure mince contre le verre de lunettes de base peut aussi provoquer des rayures ou des écrasements de la structure mince, qui sont susceptibles d'aboutir à un rejet du produit.

Un but de l'invention est alors de proposer un autre mode d'assemblage d'une structure mince avec un verre de lunettes, qui ne présente pas les inconvénients précédents.

Pour atteindre ce but et d'autres, la présente invention propose un un verre de lunettes tel que définit dans la revendication 1. Le verre de lunettes comprend :
- un verre de lunettes de base, rigide et limité par un bord périphérique qui relie latéralement des première et seconde surfaces optiques opposées de ce verre de lunettes de base ;
- une structure mince, qui est comprise entre des première et seconde surfaces parallèles de celle-ci, et qui s'étend devant la première surface du verre de lunettes de base ; ladite structure mince possédant une constitution multicouche selon une direction perpendiculaire aux première et seconde surfaces de ladite structure mince, ladite structure mince comprenant au moins une couche de cellules juxtaposées parallèlement aux dites première et seconde surfaces de la structure mince ; et deux films situés de part et d'autre de la couche ; et
- un espaceur.

Le verre de lunettes est caractérisé en ce que l'espaceur comprend :
- une partie centrale, qui s'étend le long d'une partie au moins du bord périphérique du verre de lunettes de base, avec une première surface d'appui qui est appliquée contre la première surface du verre de lunettes de base à l'intérieur du bord périphérique, et une seconde surface d'appui qui est appliquée contre la première surface de la structure mince, les première et seconde surfaces d'appui de l'espaceur étant opposées ; et
- une partie périphérique entourant de manière continue, par la périphérie, le verre de lunettes de base et la structure mince, assurant le maintien de ceux-ci.

La partie centrale de l'espaceur et la partie périphérique de l'espaceur peuvent former une seule pièce de forme complexe ou être deux éléments différents assemblés, étant entendu qu'un espaceur comportant uniquement une partie centrale n'est pas objet de cette invention.

L'espaceur possède en outre une épaisseur constante entre ses première et seconde surfaces d'appui. De plus, un volume de séparation qui est déterminé par l'espaceur entre le verre de lunettes de base et la structure mince contient un milieu gazeux lors d'une utilisation du verre de lunettes par un porteur.

Ainsi, un verre de lunettes conforme à l'invention présente tous les avantages qui résultent de sa constitution en deux composantes : le verre de lunettes de base d'une part, et la structure mince d'autre part. En particulier, ces deux composantes peuvent être obtenues selon des voies de fabrication et d'approvisionnement qui sont indépendantes. Un rendement global de production du verre de lunettes complet est alors amélioré.

Selon l'invention, la structure mince n'est pas en contact avec le verre de lunettes de base dans une partie utile optiquement de celui-ci, en dehors des surfaces d'appui de l'espaceur. Les caractéristiques optiques du verre de lunettes résultant ne sont alors pas altérées par des variations de la distance de séparation entre la structure mince et le verre de base. Ainsi, de telles variations ne provoquent pas de réduction du rendement de fabrication du verre de lunettes final.

En outre, pour la même raison, l'assemblage de la structure mince avec le verre de lunettes de base ne nécessite pas d'appliquer une force de compression dans des parties de la structure mince et du verre de base qui sont utiles optiquement. Le risque de créer des défauts visibles dans ces parties utiles est ainsi supprimé, même si la structure mince est fragile et susceptible d'être dégradée par un écrasement.

L'espaceur peut avoir en outre l'une ou l'autre des caractéristiques suivantes, ou plusieurs de celles-ci combinées entre elles :
- une section de l'espaceur peut être constante le long de la partie concernée du bord périphérique du verre de lunettes de base ;
- l'épaisseur de l'espaceur entre les première et seconde surfaces d'appui peut être comprise entre 0,05 mm (millimètre) et 1,1 mm ; et
- l'espaceur peut être en forme de boucle fermée, avec sa première et sa seconde surface d'appui qui sont continues le long du bord périphérique, et l'épaisseur de l'espaceur qui est constante le long de la boucle fermée.

Dans un premier mode de réalisation de l'invention, la structure mince et le verre de lunettes de base sont assemblés de manière permanente par des moyens d'assemblages. Ces moyens d'assemblages comprennent des premiers moyens d'assemblage et des seconds moyens d'assemblage. Les premiers moyens d'assemblage maintiennent la première surface d'appui de l'espaceur contre la première surface du verre de lunettes de base et forment une première liaison matérielle fixe, Les seconds moyens d'assemblage maintiennent la seconde surface d'appui de l'espaceur contre la première surface de la structure mince et forment une seconde liaison matérielle fixe. Par exemple, les premiers et seconds moyens d'assemblage peuvent être constitués de portions respectives de matériau adhésif qui sont disposées sur les surfaces d'appui de l'espaceur.

Dans des seconds modes de réalisation de l'invention, la structure mince et le verre de lunettes de base sont assemblés de manière démontable par des moyens d'assemblage. Ces moyens d'assemblages comprennent des premiers moyens d'assemblage et des seconds moyens d'assemblage. Les premiers moyens d'assemblage maintiennent la première surface d'appui de l'espaceur contre la première surface du verre de lunettes de base et peuvent comprendre un premier rebord («rim» en anglais) de l'espaceur qui pénètre dans un sillon du verre de lunettes de base, situé sur le bord périphérique de celui-ci. L'espaceur est alors assemblé avec le verre de base en insérant son premier rebord dans le sillon du verre de base. Un tel assemblage est simple, peu onéreux, et peut être retiré rapidement. Les seconds moyens d'assemblage maintiennent la seconde surface d'appui de l'espaceur contre la première surface de la structure mince et peuvent alors être eux-mêmes permanents ou amovibles. Lorsqu'ils sont permanents, les seconds moyens d'assemblage peuvent former de nouveau une liaison matérielle fixe entre la seconde surface d'appui de l'espaceur et la première surface de la structure mince. Lorsqu'ils sont amovibles, les seconds moyens d'assemblage comprennent un second rebord de l'espaceur qui déborde sur la seconde surface de la structure mince, de sorte que celle-ci soit enserrée entre la seconde surface d'appui et le second rebord de l'espaceur.

L'invention propose aussi un procédé de réalisation d'un verre de lunettes tel que décrit précédemment, qui comprend les étapes suivantes :
/1/ obtenir une caractérisation d'une forme de logement de verre dans une monture qui est destinée à recevoir le verre de lunettes ;
/2/ détourer le verre de lunettes de base et réaliser l'espaceur conformément au logement de la monture ;
/3/ découper la structure mince conformément à la première surface du verre de base ;
/4/ assembler l'espaceur avec la structure mince en mettant en oeuvre les seconds moyens d'assemblage ; puis
/5/ après l'étape /4/, assembler l'ensemble comprenant la structure mince et l'espaceur avec le verre de lunettes de base en mettant en oeuvre les premiers moyens d'assemblage.

Il est alors possible de fabriquer séparément l'ensemble qui comprend la structure mince et l'espaceur assemblés, et d'obtenir par ailleurs le verre de lunettes de base. Par exemple, l'assemblage de la structure mince avec l'espaceur peut être réalisé dans un atelier dédié, par exemple dans un laboratoire centralisé. Puis l'ensemble de la structure mince avec l'espaceur peut être envoyé entre les étapes /4/ et /5/ à un opticien, qui l'assemble à son tour avec le verre de lunettes de base. Une telle réalisation du verre de lunettes final est à la fois économique et compatible avec le mode de distribution existant des équipements ophtalmiques.

D'autres particularités et avantages de la présente invention apparaîtront dans la description ci-après d'exemples de réalisation non limitatifs, en référence aux dessins annexés, dans lesquels :
- les figures 1a et 1b sont des vues en plan et de profil, respectivement, d'un verre de lunettes de base utilisable pour réaliser l'invention ;
- les figures 2a à 2c sont des vues en coupe respectives de trois structures minces utilisables pour réaliser l'invention ;
- les figures 3a et 3b sont des vues en perspective d'espaceurs utilisables pour réaliser l'invention, selon deux variantes d'un premier mode de réalisation de l'invention ;
- les figures 4a et 4b sont des vues en coupe respectives des espaceurs des figures 3a et 3b ;
- les figures 5a et 5b sont des vues en coupe de verres de lunettes réalisés selon l'invention, respectivement pour les deux variantes du premier mode de réalisation de l'invention des figures 3a et 3b ;
- les figures 6a à 6c sont des vues en coupe respectives d'espaceurs utilisables pour réaliser l'invention, selon trois variantes d'un second mode de réalisation de l'invention ; et
- les figures 7a à 7c sont des vues en coupe de verres de lunettes réalisés selon l'invention, respectivement pour les trois variantes du second mode de réalisation de l'invention des figures 6a à 6c.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

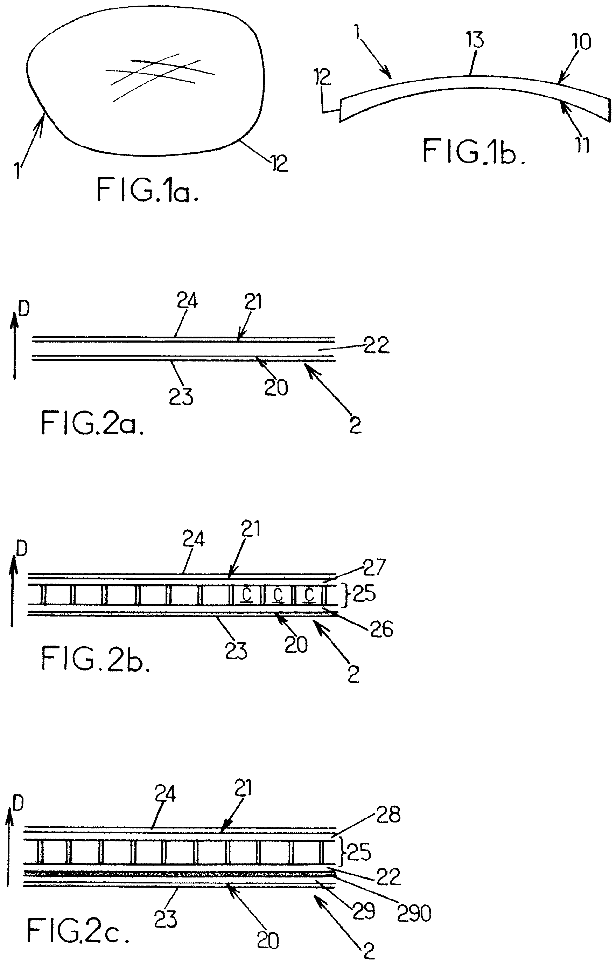

Conformément aux figures 1a et 1b, un verre de lunettes de base 1 est détouré conformément à un logement de verre dans une monture de lunettes ophtalmiques. Le verre de base 1 peut être d'un type quelconque connu avant la présente invention, pour produire une correction ophtalmique, pour apporter une protection antisolaire, ou pour réaliser une autre fonction vis-à-vis du porteur. Le verre de base 1 pourrait être utilisé en l'état par le porteur, lorsqu'il est simplement assemblé dans la monture de lunettes. Il possède une surface antérieure 10, une surface postérieure 11, et un bord périphérique 12 qui relie latéralement les surfaces 10 et 11. Le verre de base 1 est rigide, avec les surfaces 10 et 11 qui peuvent être convexe et concave, respectivement. Eventuellement, la surface 10 et/ou la surface 11 peut (peuvent) être complexe(s), c'est-à-dire être continue(s) sans marche ni rupture de pente, mais avec une courbure variable. Alternativement, la surface 10 et/ou la surface 11 peut (peuvent) être composée(s) chacune d'une juxtaposition de portions de surfaces continues individuellement, et formant ensemble la totalité de la (des) surface(s) 10 et/ou 11. En élévation, le bord 12 a la forme du logement de la monture ophtalmique. De façon connue, le bord 12 peut avoir une conformation adaptée pour le mode de montage concerné du verre dans la monture. Par exemple, lorsque le logement de monture possède un cerclage rainuré, le bord 12 peut être muni d'un relief saillant (non représenté) qui est adapté pour pénétrer dans la rainure du cerclage. Alternativement, lorsque le logement du verre dans la monture ophtalmique est ouvert, le bord 12 peut être muni d'un sillon adapté pour recevoir un fil de maintien du verre dans le logement ouvert de la monture.

Conformément aux figures 2a à 2c, une structure mince 2 possède deux surfaces parallèles 20 et 21. La structure mince 2 peut être plane, courbe, souple, ou rigide. Eventuellement, la structure mince 2 peut avoir été préformée pour avoir une courbure proche de celle de la surface 10 ou 11 du verre de base 1 au dessus de laquelle elle est destinée à être assemblée. Conformément à la figure 2a, la structure mince 2 peut comprendre au moins un film de base 22, celui-ci pouvant être polarisant, photochrome, absorbant, etc. Optionnellement, la structure mince 2 peut comporter en outre un revêtement fonctionnel 23 ou 24 sur l'une au moins de ces deux surfaces 20 et 21, par exemple un revêtement antireflet, un revêtement antirayure, un revêtement antisalissure, etc., ou une combinaison de tels revêtements.

La structure mince 2 a une configuration cellulaire, par exemple du type de la figure 2b ou de la figure 2c.

Conformément à la figure 2b, la structure mince 2 possède une constitution multicouche selon une direction D qui est perpendiculaire aux surfaces 20 et 21. La structure mince 2 comprend au moins :
- une couche 25 de cellules C qui sont juxtaposées parallèlement aux surfaces 20 et 21 ;
- deux films 26 et 27, qui sont situés de part et d'autre de la couche 25 de cellules C, selon la direction D ; et
- optionnellement, le revêtement fonctionnel 23 sur la surface 20 et/ou le revêtement fonctionnel 24 sur la surface 21.

La figure 2c montre une seconde configuration cellulaire possible pour la structure mince 2. Selon cette seconde configuration, la structure mince 2 peut comprendre au moins :
- un film de base 22 ;
- une couche 25 de cellules C qui sont juxtaposées parallèlement aux surfaces 20 et 21, la couche 25 étant portée par le film de base ;
- un film 28 de fermeture des cellules C, qui est situé d'un côté de la couche 25 opposé au film de base 22 ;
- un premier revêtement antireflet 24, qui est porté par le film de fermeture 28 d'un côté opposé à la couche 25 des cellules C ;
- un film additionnel 29, qui est situé d'un côté du film de base 22 opposé à la couche 25 des cellules C ;
- un second revêtement antireflet 23 qui est porté par le film additionnel 29 d'un côté opposé au film de base 22 ; et
- des moyens de liaison 290, qui relient le film additionnel 29 au film de base 22, d'un côté du film additionnel 29 opposé au second revêtement antireflet 23.

Les moyens de liaison 290 peuvent être une couche intermédiaire de matériau adhésif, selon l'un des modes de réalisation d'une telle couche qui est connu de l'Homme du métier.

Des compositions des revêtements fonctionnels 23 et 24, des matériaux possibles pour les films énumérés ci-dessus, des dimensions ainsi que des modes de réalisation de toutes ces composantes sont aussi supposés connus, si bien qu'il n'est pas nécessaire de les répéter ici. De même, il est connu que les cellules C peuvent contenir une ou plusieurs substances actives qui confèrent à la structure mince 2 une ou plusieurs fonctions optiques additionnelles.

Dans la suite, et à titre d'illustration non limitative, on supposera que le verre de lunettes de base 1 et la structure mince 2 sont assemblés selon l'invention avec la surface 10 du verre de base 1 et la surface 20 de la structure mince 2 qui sont en regard l'une de l'autre. Dans cette configuration d'assemblage, les surfaces 10 et 11 du verre de base 1 sont respectivement sa première et sa seconde surface dans le mode de désignation qui a été utilisé pour la partie générale de la description de l'invention. Ainsi, la première surface optique du verre de lunettes de base 1 peut être convexe. De même, les surfaces 20 et 21 de la structure mince 2 correspondent respectivement à ses première et seconde surfaces, ainsi désignées dans la partie générale de la description.

L'assemblage aboutit alors à disposer le verre de base 1 et la structure mince 2 avec leurs faces respectives 10 et 20 en vis-à-vis. Autrement dit, les premières surfaces respectives du verre de base et de la structure mince sont en vis-à-vis au sein du verre de lunettes résultant. Un volume de séparation qui est alors présent entre le verre de base et la structure mince est rempli d'un milieu gazeux, par exemple de l'air. Avantageusement, la structure mince peut posséder une forme courbe, avec un sens de courbure de la première surface de la structure mince qui est opposé à celui de la première surface optique du verre de lunettes de base. En effet, le volume de séparation entre le verre de lunettes de base et la structure mince peut ainsi posséder une épaisseur qui est sensiblement constante. L'épaisseur totale du verre de lunettes résultant est ainsi limitée, si bien que ce verre est plus esthétique.

Dans le verre de lunettes qui résulte de l'assemblage, la première surface optique du verre de lunettes de base est protégée par la structure mince. Une telle configuration est particulièrement adaptée lorsque la première surface optique du verre de lunettes de base présente une discontinuité avec un saut de hauteur sagittale à au moins un endroit de cette surface. En effet, la structure mince empêche que des salissures se déposent dans la discontinuité de surface, et puissent altérer la contribution de cette surface discontinue à la puissance optique du verre de base. En particulier, la première surface optique du verre de lunettes de base peut ainsi être pourvue d'une structure de Fresnel, sans que des problèmes de salissure et de nettoyage en résultent.

Par ailleurs, pour réduire une augmentation de la réflexion lumineuse totale du verre de lunettes qui pourrait résulter de la présence du volume de séparation entre le verre de base et la structure mince, ce volume de séparation étant rempli d'un milieu gazeux, les premières surfaces respectives du verre de lunettes de base et de la structure mince peuvent avantageusement être pourvues de revêtements antireflets respectifs. La référence 13 dans la figure 1b désigne un tel revêtement antireflet qui est porté par la surface 10 du verre de base 1. De même, la référence 23 dans les figures 2a à 2c désigne un autre revêtement antireflet qui est porté par la première surface 20 de la structure mince 2. Eventuellement, la seconde surface 21 de la structure mince 2 peut aussi être pourvue d'un revêtement antireflet 24.

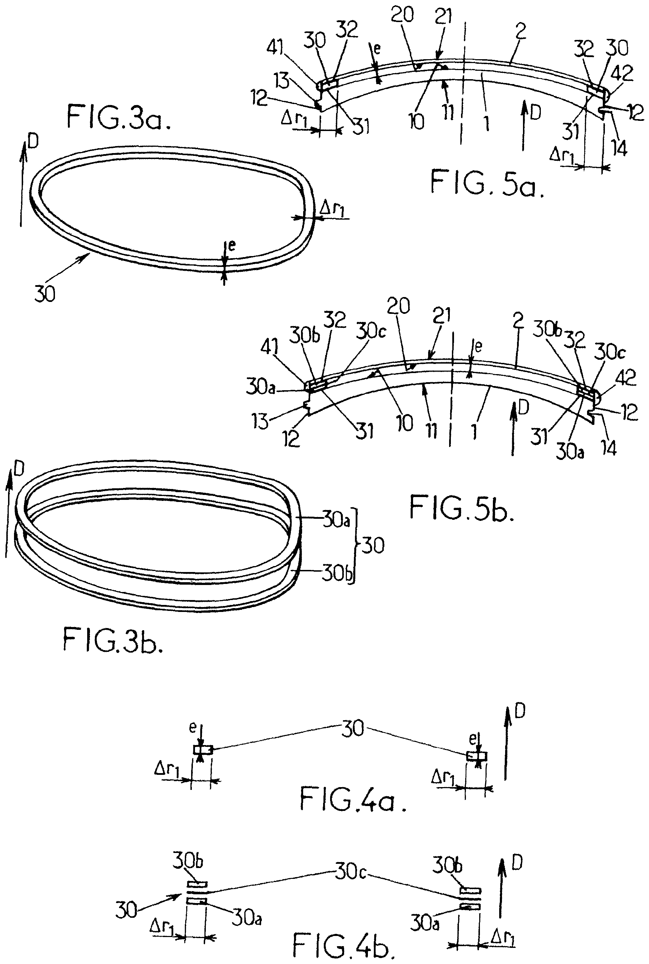

Les figures 3 à 5 illustrent un premier mode de réalisation de l'invention, dans lequel le verre de base 1 et la structure mince 2 sont assemblés de façon permanente pour former le verre de lunettes final. Les figures 3a, 4a et 5a correspondent à une première variante d'un tel assemblage permanent, et les figures 3b, 4b et 5b correspondent à une seconde variante d'assemblage permanent.

Dans la première variante d'assemblage permanent, l'espaceur est composé de deux pièces différentes, une partie centrale : le cordon et une partie périphérique : le cordon périphérique.

La partie centrale de l'espaceur 30 est constitué par un cordon d'épaisseur constante e (figure 3a). Un tel cordon est de préférence souple, pour être amené à suivre la forme du bord périphérique 12 du verre de base 1. En outre, sa souplesse permet de l'appliquer dans son ensemble sur la surface 10 qui est courbe. Par exemple, l'espaceur 30 peut être en polyuréthane (PU), de préférence transparent pour raison esthétique. Il peut avoir une section rectangulaire (figure 4a), avec l'épaisseur e selon la direction D qui peut être environ 250 µm (micromètre) par exemple, et une largeur Δr₁ perpendiculairement à la direction D qui peut être environ 600 µm par exemple. Par rapport à la direction D, les surfaces inférieure et supérieure de l'espaceur 30 constituent respectivement une première et une seconde surface d'appui. Des premiers moyens d'assemblage peuvent alors former une première liaison matérielle entre la première surface d'appui de l'espaceur 30 et la surface 10 du verre de lunettes de base 1. De même, des seconds moyens d'assemblage peuvent former une seconde liaison matérielle entre la seconde surface d'appui de l'espaceur 30 et la première surface 20 de la structure mince 2. Ces liaisons matérielles peuvent être des lignes de colle ou de matériau adhésif, et dans un mode d'assemblage préféré, des portions d'une couche de matériau adhésif sensible à la pression (PSA pour « pressure sensitive adhesive » en anglais). Chacune de ces portions de couches de matériau adhésif peut posséder une forme de bande en boucle qui recouvre la surface d'appui correspondante de l'espaceur 30. Sur la figure 5a, la référence 31 désigne une première portion de couche adhésive qui est située entre l'espaceur 30 et le verre de base 1, et la référence 32 désigne une seconde portion de couche adhésive qui est située entre l'espaceur 30 et la structure mince 2. Les liaisons matérielles qui sont ainsi constituées sont fixes.

Selon un perfectionnement de ce premier mode d'assemblage, un cordon périphérique peut être ajouté à cheval sur une limite périphérique de la structure mince 2 qui relie les première et seconde surfaces de celle-ci, et sur une partie au moins d'un bord externe de l'espaceur 30 qui relie ses deux surfaces d'appui. Un tel cordon peut avoir au moins deux fonctions. Une première de ces fonctions peut consister à constituer un scellement de bord de la structure mince 2, notamment lorsque cette dernière possède une structure cellulaire comme représenté sur les figures 2b et 2c. Une seconde fonction d'un tel cordon peut être d'augmenter la cohésion entre la structure mince 2 et l'espaceur 30, notamment pour réduire des risques de délamination par rupture des seconds moyens d'assemblage. De préférence, un tel cordon, qui peut être en polyéthylène (PE) ou aussi en polyuréthane (PU), s'étend de façon continue et uniforme tout autour de la structure mince 2 et de l'espaceur 30. Les parties gauche et droite de la figure 5a illustrent deux possibilités pour l'agencement du cordon. Selon une première possibilité (partie gauche de la figure 5a), le cordon 41 est situé à cheval sur la limite périphérique de la structure mince 2 et sur le bord externe de l'espaceur 30 seulement. Selon une seconde possibilité (partie droite de la figure 5a), le cordon 42 est situé à cheval sur la limite périphérique de la structure mince 2, le bord externe de l'espaceur 30 et aussi sur une partie au moins du bord périphérique 12 du verre de lunettes de base 1. Dans cette seconde possibilité, le cordon 42 participe aussi à réduire les risques de délamination par rupture des premiers moyens d'assemblage, entre le verre de base 1 et l'espaceur 30.

Dans la seconde variante d'assemblage permanent, l'espaceur 30 est constitué par plusieurs cordons chacun d'épaisseur constante. Autrement dit, l'espaceur peut comprendre un empilement d'au moins deux unités d'espaceur, avec une direction de l'empilement qui relie les premières surfaces respectives du verre de lunettes de base et de la structure mince. Des unités d'espaceur successives le long de la direction d'empilement sont alors reliées entre elles par des moyens de liaison additionnels. Les figures 3b, 4b et 5b illustrent une telle variante à deux unités d'espaceur 30a et 30b, avec une couche intermédiaire 30c de colle ou de matériau adhésif, par exemple de matériau adhésif sensible à la pression, qui est située entre les unités d'espaceur 30a et 30b. D désigne la direction d'empilement des unités d'espaceur, qui est aussi la direction d'assemblage de la structure mince 2 avec le verre de base 1. Les unités d'espaceur et les moyens de liaison additionnels forment ensemble l'espaceur 30. Celui-ci peut alors avoir une épaisseur totale e qui est facilement ajustable, en variant le nombre d'unités d'espaceur qui sont empilées selon la direction D. Les figures 3b, 4b et 5b sont déduites directement des figures 3a, 4a et 5a en modifiant la structure de l'espaceur 30 comme il vient d'être décrit, si bien qu'il n'est pas nécessaire de les décrire plus en détail.

Les parties gauche et droite des figures 5a et 5b illustrent en outre deux façonnages du bord périphérique 12 du verre de lunettes de base 1, qui sont connus de l'Homme du métier et compatibles avec le mode d'assemblage permanent. Il est entendu que ces façonnages de bord du verre de base 1 sont indépendants du type de cordon 41 ou 42 qui est utilisé pour renforcer la (les) liaison(s) de l'espaceur 30 avec la structure mince 2 (et le verre de base 1). Selon l'un de ces façonnages possibles, le bord périphérique 12 du verre de base 1 peut être muni d'un rebord («rim» en anglais - parties gauches des figures 5a et 5b) 13 qui est adapté pour pénétrer dans une rainure d'un logement cerclé de monture ophtalmique. Alternativement, le bord 12 du verre de base 1 peut être muni d'un sillon («groove» en anglais - parties droites des figures 5a et 5b) 14 qui est adapté pour recevoir un fil de retenue du verre de lunettes dans un logement ouvert de monture ophtalmique. Ces deux modes de montage du verre de lunettes dans des montures ophtalmiques sont connus et très largement utilisés.

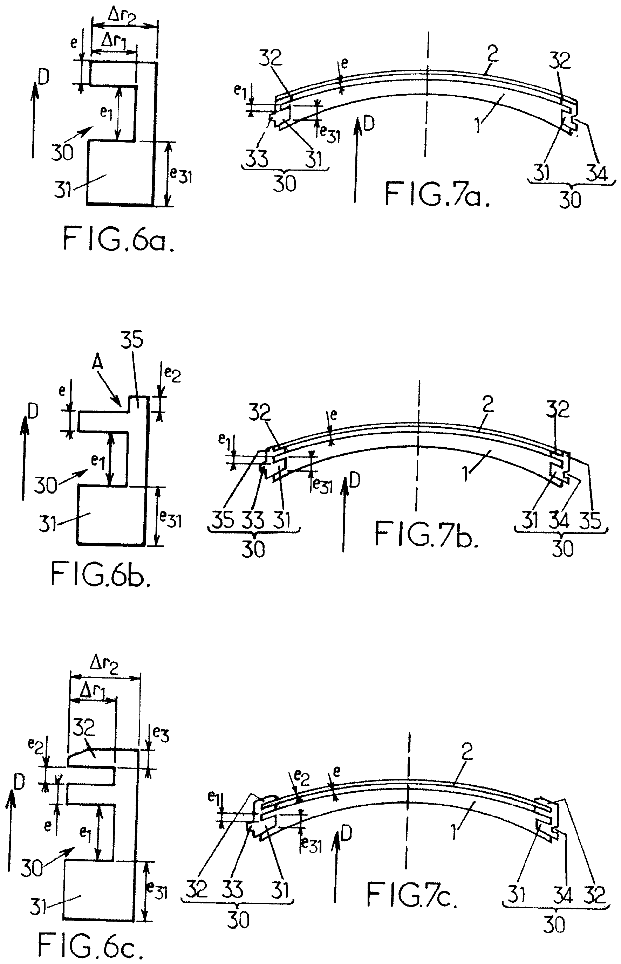

Les figures 6 et 7 illustrent par ailleurs des variantes d'un second mode de réalisation de l'invention, dans lequel le verre de base 1 et la structure mince 2 sont assemblés de façon amovible au sein du verre de lunettes final avec un espaceur de forme complexe. Il est alors possible de les séparer, par exemple pour associer le même verre de base avec une autre structure mince, de façon à renouveler la structure mince si elle est dégradée, ou à la remplacer par une autre structure mince pour conférer au verre final des fonctions différentes.

D'une façon préférée, l'assemblage est amovible au niveau des premiers moyens d'assemblage 31, entre le verre de lunettes de base 1 et l'espaceur 30. Pour cela, les premiers moyens d'assemblage 31 peuvent comprendre un premier rebord de l'espaceur 30 qui pénètre dans un sillon du verre de lunettes de base 1, situé sur le bord périphérique 12 de celui-ci. La direction D, perpendiculaire aux surfaces du verre de base 1 et à la structure mince 2 dans le verre final, est reportée sur les figures 6a à 6c par rapport à l'orientation de l'espaceur 30 dans le verre final. Le premier rebord de l'espaceur 30 est ainsi désigné par la référence 31, et s'étend perpendiculairement à la direction D. Les figures 7a à 7c montrent l'assemblage amovible d'un tel espaceur 30 sur le bord périphérique 12 du verre de base 1, avec le sillon vu en coupe et dans lequel pénètre le premier rebord 31. Un tel assemblage amovible est obtenu simplement lorsque l'espaceur 30 est en forme de boucle fermée et constitué d'un matériau souple et élastique. De cette façon, le premier rebord 31 peut en effet être introduit facilement dans le sillon du bord périphérique 12 tout autour du verre de base 1, en déformant momentanément l'espaceur 30. En outre, la longueur de la boucle de l'espaceur 30 peut être choisie un peu plus petite que la longueur du bord périphérique 12 du verre de base 1, de sorte qu'un allongement élastique de l'espaceur 30 assure son maintien sur le bord périphérique 12. L'espaceur 30 peut encore être en polyuréthane, de préférence transparent. Des dimensions possibles de l'espaceur 30 dans une section de celui-ci peuvent être, à titre d'exemple :
épaisseur e de l'espaceur 30, mesurée selon la direction D et correspondant à l'épaisseur du volume de séparation entre le verre de lunettes de base 1 et la structure mince 2 dans le verre final : 250 µm ;
épaisseur e₁ de l'espaceur 30, mesurée selon la direction D et correspondant à la distance entre la première surface 10 et le sillon qui est situé dans le bord périphérique 12 du verre de base 1 : 400 µm ;
épaisseur e₃₁ de l'espaceur 30, mesurée selon la direction D et correspondant à la largeur du sillon qui est situé dans le bord périphérique 12 du verre de base 1 : 550 µm ;
largueur Δr₁ du premier rebord 31, mesurée perpendiculairement à la direction D et correspondant à la profondeur du sillon qui est situé dans le bord périphérique 12 du verre de base 1 : 600 µm ; et
largueur Δr₂ de la seconde surface d'appui de l'espaceur 30 mesurée perpendiculairement à la direction D et correspondant aux seconds moyens d'assemblage 32 : 900 µm.

Simultanément et indépendamment, l'assemblage peut être soit permanent soit amovible au niveau des seconds moyens d'assemblage 32, entre la structure mince 2 et l'espaceur 30. Les figures 6a et 7a illustrent une première variante dans laquelle les seconds moyens d'assemblage 32 sont permanents. Pour cela, l'espaceur 30 peut posséder une surface d'appui dans sa partie supérieure selon la direction D, qui est identique à celle déjà décrite en relation avec les figures 3 à 5. Les moyens d'assemblage 32 peuvent donc de nouveau former une liaison matérielle fixe, notamment par collage ou adhésion, entre cette seconde surface d'appui de l'espaceur 30 et la première surface 20 de la structure mince 2.

Les figures 6b et 7b illustrent une deuxième variante dans laquelle les premiers moyens d'assemblage 31 sont encore amovibles, et les seconds moyens d'assemblage 32 sont encore permanents. La différence avec la variante précédente réside dans la présence d'une nervure 35 autour de la seconde face d'appui de l'espaceur 30. De cette façon, l'espaceur 30 possède un profil de section avec un angle rentrant A à partir de la seconde surface d'appui. Cet angle A est alors adapté pour recevoir une limite périphérique de la structure mince 2, formant ainsi un guide d'alignement pour l'assemblage de l'espaceur 30 avec la structure mince 2. La nervure 35 peut avoir une hauteur e₂ de 350 µm, par exemple, mesurée parallèlement à la direction D. La structure mince 2 peut alors encore être assemblée avec l'espaceur 30 par collage ou adhésion sur la seconde surface d'appui de ce dernier, à l'intérieur de l'angle A.

Enfin, l'assemblage peut aussi être amovible au niveau des seconds moyens d'assemblage 32, entre la structure mince 2 et l'espaceur 30, en sus des premiers moyens d'assemblage 31 amovibles. Une telle troisième variante est illustrée par les figures 6c et 7c. Pour cela, les seconds moyens d'assemblage 32 peuvent comprendre un second rebord 32 de l'espaceur 30, qui déborde sur la seconde surface 21 de la structure mince 2 dans le verre de lunettes final. La structure mince 2 est ainsi enserrée entre la seconde surface d'appui et le second rebord 32 de l'espaceur 30. En fait, un tel second rebord 32 est situé à l'extrémité de la nervure 35 introduite par la deuxième variante d'assemblage amovible, et s'étend perpendiculairement à cette nervure 35 en direction du centre du verre de lunettes. Le second rebord 32 peut avoir les dimensions suivantes :
épaisseur e₃ mesurée selon la direction D : 250 µm ; et
largeur mesurée perpendiculairement à la direction D : identique à celle du premier rebord 31.

Eventuellement, le second rebord 32 peut être muni d'un chanfrein à son extrémité vers le centre du verre de lunettes et du côté antérieur de celui-ci.

Il est entendu que les dimensions de l'espaceur 30 qui n'ont pas été répétées pour les deuxième et troisième variantes des assemblages amovibles peuvent être identiques à celles citées pour la première variante. Il en est de même des matériaux possibles pour constituer l'espaceur 30 dans les dernières variantes. En particulier, dans la troisième variante, la structure mince 2 peut être introduite facilement entre la seconde surface d'appui et le second rebord 31 de l'espaceur 30, en déformant momentanément celui-ci.

Pour permettre de monter facilement dans une monture ophtalmique des verres de lunettes qui résultent des assemblages amovibles précédents, il peut être commode d'adapter l'espaceur en fonction du type de monture. Comme pour les figures 5a et 5b, les parties gauches des figures 7a, 7b et 7c montrent des verres finals qui sont adaptés pour être montés dans des montures à logements cerclés, et les parties droites des mêmes figures montrent des verres finals qui sont adaptés pour être maintenus par un fil dans un logement ouvert de monture de lunettes. Ainsi, l'espaceur 30 peut posséder en outre un relief saillant 33 sur son bord externe qui est opposé au verre de lunettes de base 1 et à la structure mince 2, ce relief saillant étant adapté pour pénétrer dans la rainure de cerclage d'un logement de monture de lunettes. Alternativement, l'espaceur 30 peut être muni sur son bord externe d'un sillon 34 qui est adapté pour recevoir le fil de maintien du verre de lunettes dans un logement ouvert de monture de lunettes. Autrement dit, la forme de façonnage qui est usuellement réalisée sur le bord périphérique d'un verre de lunettes, pour permettre son montage dans divers types de montures, peut être reportée sur le bord périphérique externe de l'espaceur 30 qui est utilisé dans la présente invention. Dans ce cas, cette forme de bord périphérique externe peut être créée directement lors du moulage ou de l'extrusion de l'espaceur 30.

On décrit maintenant un procédé de réalisation d'un verre de lunettes selon l'invention. Tout d'abord, la forme du logement du verre dans la monture est caractérisée, d'une façon qui peut être l'une de celles connues de l'Homme du métier. Le verre de lunettes de base 1 et l'espaceur 30 sont alors réalisés conformément au logement de la monture. Lorsque le verre de base 1 est destiné à être lui-même directement en contact avec la monture, comme dans le cas des figures 5a et 5b, le verre de base 1 est détouré selon un contour qui est identique à celui du logement dans la monture. Alternativement, lorsque l'espaceur 30 est destiné à être intercalé entre le verre de base 1 et la monture, comme dans le cas des figures 7a à 7c, le verre de base 1 doit être détouré selon un contour qui est parallèle à celui du logement de la monture, avec un retrait vers le centre du verre qui est égal à l'écart de largeur Δr₂-Δr₁ de l'espaceur 30.

Lorsque l'espaceur 30 est conforme aux figures 3a ou 3b, ou qu'il comporte plus de deux unités d'espaceur similaires aux unités 30a et 30b, il peut être découpé à l'intérieur d'au moins une feuille, par exemple une feuille de polyuréthane d'épaisseur constante. Un outil de découpe connu peut être utilisé, qui ne provoque pas de retrait du matériau élastique et permet d'obtenir la largeur Δr₁ qui est voulue. Par exemple, un tel découpage peut être réalisé à l'aide d'un laser dont la longueur d'onde d'émission a été convenablement choisie en fonction du matériau de l'espaceur.

La structure mince 2 est en outre découpée dans une feuille d'approvisionnement de cette structure, conformément à la première surface 10 du verre de base 1, limitée par son bord périphérique 12.

Selon une caractéristique du procédé de l'invention, la structure mince 2 et l'espaceur 30 sont d'abord assemblés l'un avec l'autre, séparément du verre de base 1. Cet assemblage partiel peut ainsi être effectué dans un laboratoire spécialisé, en mettant en oeuvre les seconds moyens d'assemblage 32 de la façon déjà décrite pour chaque mode de réalisation de l'invention. L'ensemble qui est ainsi obtenu peut alors être envoyé à un détaillant opticien qui l'assemblera avec le verre de base 1, en mettant en oeuvre les premiers moyens d'assemblage 31 qui ont aussi déjà été décrits.

Toutefois, avant d'être assemblé avec le verre de base 1, la structure mince 2 ou l'ensemble qui comprend la structure mince 2 et l'espaceur 30 assemblés l'un avec l'autre par les seconds moyens d'assemblage 32, peut être préformé pour lui conférer une courbure. Ce préformage peut être réalisé de préférence après que l'espaceur 30 a été assemblé avec la structure mince 2, lorsque cet assemblage est permanent comme dans les cas des figures 5a, 5b, 7a et 7b. Lorsque cet assemblage est amovible, comme dans le cas de la figure 7c, le préformage peut être appliqué à la structure mince 2 avant qu'elle soit assemblée avec l'espaceur 30. Dans tous les cas, la structure mince 2 possède ensuite une forme qui est sensiblement similaire à celle de la première surface 10 du verre de base 1.

Enfin, lorsque la structure mince 2 et l'espaceur 30 sont assemblés l'un avec l'autre de façon permanente, le cordon périphérique supplémentaire 41 ou 42 peut être appliqué comme décrit en référence aux figures 5a et 5b. Lorsque ce cordon ne recouvre que la limite périphérique de la structure mince 2 et le bord externe de l'espaceur 30, sans déborder sur le bord périphérique 12 du verre de base 1, il peut être appliqué sur l'ensemble comprenant la structure mince 2 et l'espaceur 30 après que ceux-ci ont été assemblés l'un avec l'autre. Autrement dit, le cordon 41, lorsqu'il est utilisé, est appliqué après que les premiers moyens d'assemblage ont été mis en oeuvre, mais il peut être appliqué ainsi avant que les seconds moyens d'assemblage aient eux-mêmes été mis en oeuvre. Par contre, le cordon 42 qui déborde sur le bord périphérique 12 du verre de base 1 est nécessairement appliqué après que la structure mince 2 a été complètement assemblée avec le verre de base 1.

Il est entendu que l'invention peut être reproduite en introduisant diverses modifications par rapport à la description détaillée qui en a été donnée ci-dessus, tout en conservant certains au moins des avantages mentionnés. En particulier, des modes de réalisation alternatifs qui concernent des parties différentes du verre de lunettes de l'invention peuvent être combinés les uns avec les autres d'une façon quelconque. En outre, il est rappelé que les dimensions et les matériaux qui ont été cités ne l'ont été qu'à titre d'exemple pour permettre de reproduire l'invention, étant entendu que ces matériaux et dimensions peuvent aussi être modifiés.

## Revendications

1. Verre de lunettes comprenant :
- un verre de lunettes de base (1), rigide et limité par un bord périphérique (12) reliant latéralement des première (10) et seconde (11) surfaces optiques opposées dudit verre de lunettes de base ;
- une structure mince (2) comprise entre des première (20) et seconde (21) surfaces parallèles de ladite structure mince, et s'étendant devant la première surface (10) du verre de lunettes de base (1) ; ladite structure mince (2) possédant une constitution multicouche selon une direction perpendiculaire aux première (20) et seconde (21) surfaces de ladite structure mince, ladite structure mince (2) comprenant au moins une couche (25) de cellules (C) juxtaposées parallèlement aux dites première et seconde surfaces de la structure mince ; et deux films (26, 27);
**caractérisé en ce que** lesdits deux films (26, 27) sont situés de part et d'autre de la couche de cellules selon ladite direction perpendiculaire,
et **en ce que** le verre de lunettes comporte un espaceur comprenant :
- une partie centrale s'étendant le long d'une partie au moins du bord périphérique (12) du verre de lunettes de base (1), et ayant lui-même une première surface d'appui appliquée contre la première surface (10) du verre de lunettes de base (1) à l'intérieur du bord périphérique (12), et une seconde surface d'appui appliquée contre la première surface (20) de la structure mince (2), lesdites première et seconde surfaces d'appui de l'espaceur étant opposées ; et
- une partie périphérique entourant de manière continue, par la périphérie, le verre de lunettes de base et la structure mince, assurant le maintien de ceux-ci ;
l'espaceur ayant une épaisseur (e) constante entre les première et seconde surfaces d'appui ; et
un volume de séparation déterminé par l'espaceur entre le verre de lunettes de base (1) et la structure mince (2) contenant un milieu gazeux lors d'une utilisation du verre de lunettes par un porteur.

2. Verre de lunettes selon la revendication 1, dans lequel l'espaceur est composé de deux pièces distinctes: une partie centrale (30) et une partie périphérique (41, 42).

3. Verre de lunettes selon la revendication 2, dans lequel la partie centrale de l'espaceur (30) comprend un empilement d'au moins deux unités d'espaceur (30a, 30b), avec une direction dudit empilement reliant les premières surfaces (10, 20) respectives du verre de lunettes de base (1) et de la structure mince (2), et des unités d'espaceur successives le long de la direction d'empilement étant reliées entre elles par des moyens de liaison additionnels (30c).

4. Verre de lunettes selon la revendication 2, dans lequel la partie périphérique comprend un cordon périphérique (41 ; 42) situé à cheval sur une limite périphérique de la structure mince (2) reliant les première et seconde surfaces de ladite structure mince, et sur une partie au moins d'un bord externe de la partie centrale de l'espaceur (30) reliant les première et seconde surfaces d'appui dudit espaceur.

5. Verre de lunettes selon la revendication 4, dans lequel le cordon périphérique (42) est situé à cheval sur la limite périphérique de la structure mince (2), le bord externe de l'espaceur (30) et sur une partie au moins du bord périphérique (12) du verre de lunettes de base (1).

6. Verre de lunettes selon la revendication 1, dans lequel l'espaceur est formé d'une seule pièce de forme complexe (30) et dans lequel les premiers moyens d'assemblage (31) comprennent un premier rebord de l'espaceur (30) pénétrant dans un sillon du verre de lunettes de base (1) situé sur le bord périphérique (12) dudit verre de lunettes de base.

7. Verres de lunettes selon la revendication 6, dans lequel les seconds moyens d'assemblage (32) forment une liaison matérielle fixe entre la seconde surface d'appui de l'espaceur (30) et la première surface (20) de la structure mince (2).

8. Verres de lunettes selon la revendication 7, dans lequel l'espaceur (30) possède un profil de section avec un angle rentrant (A) à partir de la seconde surface d'appui dudit espaceur, adapté pour recevoir une limite périphérique de la structure mince (2).

9. Verres de lunettes selon la revendication 6, dans lequel les seconds moyens d'assemblage (32) comprennent un second rebord de l'espaceur (30) débordant sur la seconde surface (21) de la structure mince (2), de sorte que ladite structure mince est enserrée entre la seconde surface d'appui et le second rebord de l'espaceur.

10. Verre de lunettes selon l'une quelconque des revendications 6 à 9, dans lequel l'espaceur (30) possède en outre un relief saillant (33) sur un bord externe dudit espaceur opposé au verre de lunettes de base (1) et à la structure mince (2), ledit relief saillant étant adapté pour pénétrer dans une rainure de cerclage d'un logement de monture de lunettes.

11. Verre de lunettes selon l'une quelconque des revendications 6 à 9, dans lequel l'espaceur (30) possède en outre un sillon (34) sur un bord externe dudit espaceur opposé au verre de lunettes de base (1) et à la structure mince (2), ledit sillon étant adapté pour recevoir un fil de maintien du verre de lunettes dans un logement ouvert de monture de lunettes.

12. Verre de lunettes selon l'une quelconque des revendications précédentes, dans lequel la première surface (10) du verre de lunettes de base (1) et l'une au moins des surfaces (20,21) de la structure mince (2) sont pourvues de revêtements antireflets (13, 23, 24)..

13. Verre de lunettes selon l'une quelconque des revendications 1 à 11, dans lequel la structure mince (2) possède une constitution multicouche selon une direction perpendiculaire aux première (20) et seconde (21) surfaces de ladite structure mince, et comprend au moins :
- un film de base (22) ;
- une couche (25) de cellules (C) juxtaposées parallèlement aux dites première et seconde surfaces de la structure mince, portée par le film de base ;
- un film (28) de fermeture des cellules situé d'un côté de la couche de cellules opposé au film de base ;
- un premier revêtement antireflet (24) porté par le film de fermeture d'un côté opposé à la couche de cellules ;
- un film additionnel (29) situé d'un côté du film de base opposé à la couche de cellules ;
- un second revêtement antireflet (23) porté par le film additionnel d'un côté opposé au film de base ; et
- des moyens de liaison (290) reliant le film additionnel au film de base d'un côté dudit film additionnel opposé au second revêtement antireflet.

14. Procédé de réalisation d'un verre de lunettes, ledit verre de lunettes étant conforme à l'une quelconque des revendications précédentes, et ledit procédé comprenant les étapes suivantes :
/1/ obtenir une caractérisation d'une forme de logement de verre dans une monture destinée à recevoir ledit verre de lunettes ;
/2/ détourer le verre de lunettes de base (1) et réaliser l'espaceur (30) conformément au logement de la monture ;
/3/ découper la structure mince (2) conformément à la première surface du verre de base (1) ;
/4/ assembler l'espaceur (30) avec la structure mince (2) en mettant en oeuvre les seconds moyens d'assemblage (32) ; puis
/5/ après l'étape /4/, assembler l'ensemble comprenant la structure mince (2) et l'espaceur (30) avec le verre de lunettes de base (1) en mettant en oeuvre les premiers moyens d'assemblage (31).

15. Procédé selon la revendication 14, suivant lequel le verre de lunettes est conforme à la revendication 4, et suivant lequel le cordon périphérique (41) est appliqué sur l'ensemble comprenant la structure mince (2) et l'espaceur (30) après l'étape /4/.

16. Procédé selon la revendication 14, suivant lequel le verre de lunettes est conforme à la revendication 5, et suivant lequel le cordon périphérique (42) est appliqué après l'étape /5/.

## Patentansprüche

1. Brillenglas, welches umfasst:
- ein Basisbrillenglas (1), das starr ist und von einem Umfangsrand (12) begrenzt wird, der eine erste (10) und eine zweite (11) optische Fläche des Basisbrillenglases, die einander gegenüberliegen, seitlich verbindet;
- eine dünne Struktur (2), die sich zwischen einer ersten (20) und einer zweiten (21) Fläche der dünnen Struktur, die parallel sind, befindet und sich vor der ersten Fläche (10) des Basisbrillenglases (1) erstreckt; wobei die dünne Struktur (2) einen mehrschichtigen Aufbau in einer Richtung, die zu der ersten (20) und zweiten (21) Fläche der dünnen Struktur senkrecht ist, besitzt, wobei die dünne Struktur (2) wenigstens eine Schicht (25) von Zellen (C), die parallel zu der ersten und der zweiten Fläche der dünnen Struktur nebeneinander angeordnet sind, und zwei Filme (26, 27) umfasst;
**dadurch gekennzeichnet, dass** sich die zwei Filme (26, 27) in der senkrechten Richtung beiderseits der Schicht von Zellen befinden,
und dadurch, dass das Brillenglas einen Abstandshalter aufweist, welcher umfasst:
- einen mittleren Teil, der sich entlang wenigstens eines Teils des Umfangsrandes (12) des Basisbrillenglases (1) erstreckt und seinerseits eine erste Anlagefläche, die im Inneren des Umfangsrandes (12) an der ersten Fläche (10) des Basisbrillenglases (1) anliegt, und eine zweite Anlagefläche, die an der ersten Fläche (20) der dünnen Struktur (2) anliegt, aufweist, wobei die erste und die zweite Anlagefläche des Abstandshalters einander gegenüberliegen; und
- einen Umfangsteil, der das Basisbrillenglas und die dünne Struktur am Umfang durchgehend umgibt, wobei er den Zusammenhalt derselben sicherstellt;
wobei der Abstandshalter eine konstante Dicke (e) zwischen der ersten und der zweiten Anlagefläche aufweist; und
wobei ein Trennvolumen, das durch den Abstandshalter zwischen dem Basisbrillenglas (1) und der dünnen Struktur (2) bestimmt wird, bei einer Verwendung des Brillenglases durch einen Träger ein gasförmiges Medium enthält.

2. Brillenglas nach Anspruch 1, wobei der Abstandshalter aus zwei verschiedenen Teilen besteht: einem mittleren Teil (30) und einem Umfangsteil (41, 42).

3. Brillenglas nach Anspruch 2, wobei der mittlere Teil des Abstandshalters (30) einen Stapel von wenigstens zwei Abstandshaltereinheiten (30a, 30b) umfasst, mit einer Richtung des Stapels, welche die jeweiligen ersten Flächen (10, 20) des Basisbrillenglases (1) und der dünnen Struktur (2) verbindet, und wobei Abstandshaltereinheiten, die in der Stapelungsrichtung aufeinander folgen, durch zusätzliche Verbindungsmittel (30c) miteinander verbunden sind.

4. Brillenglas nach Anspruch 2, wobei der Umfangsteil ein Umfangsband (41, 42) umfasst, das auf einer Umfangsgrenze der dünnen Struktur (2), welche die erste und die zweite Fläche der dünnen Struktur verbindet, und auf wenigstens einem Teil eines äußeren Randes des mittleren Teils des Abstandshalters (30), der die erste und die zweite Anlagefläche des Abstandshalters verbindet, aufsitzt.

5. Brillenglas nach Anspruch 4, wobei das Umfangsband (42) auf der Umfangsgrenze der dünnen Struktur (2), dem äußeren Rand des Abstandshalters (30) und auf wenigstens einem Teil des Umfangsrandes (12) des Basisbrillenglases (1) aufsitzt.

6. Brillenglas nach Anspruch 1, wobei der Abstandshalter von einem einzigen Teil von komplexer Form (30) gebildet wird, und wobei die ersten Verbindungsmittel (31) eine erste Randleiste des Abstandshalters (30) umfassen, die in eine Rille des Basisbrillenglases (1) eingreift, welche sich auf dem Umfangsrand (12) des Basisbrillenglases befindet.

7. Brillengläser nach Anspruch 6, wobei die zweiten Verbindungsmittel (32) eine feste stoffschlüssige Verbindung zwischen der zweiten Anlagefläche des Abstandshalters (30) und der ersten Fläche (20) der dünnen Struktur (2) bilden.

8. Brillengläser nach Anspruch 7, wobei der Abstandshalter (30) ein Querschnittsprofil mit einem in Bezug auf die zweite Anlagefläche des Abstandshalters einspringenden Winkel (A) besitzt, der dafür ausgelegt ist, eine Umfangsgrenze der dünnen Struktur (2) aufzunehmen.

9. Brillengläser nach Anspruch 6, wobei die zweiten Verbindungsmittel (32) eine zweite Randleiste des Abstandshalters (30) umfassen, welche die zweite Fläche (21) der dünnen Struktur (2) überlappt, so dass die dünne Struktur zwischen der zweiten Anlagefläche und der zweiten Randleiste des Abstandshalters eingespannt ist.

10. Brillenglas nach einem der Ansprüche 6 bis 9, wobei der Abstandshalter (30) außerdem eine vorspringende Erhebung (33) auf einem äußeren Rand des Abstandshalters besitzt, welcher dem Basisbrillenglas (1) und der dünnen Struktur (2) gegenüberliegt, wobei die vorspringende Erhebung dafür ausgelegt ist, in eine umlaufende Nut einer Aufnahmeöffnung eines Brillengestells einzugreifen.

11. Brillenglas nach einem der Ansprüche 6 bis 9, wobei der Abstandshalter (30) außerdem eine Rille (34) auf einem äußeren Rand des Abstandshalters besitzt, welcher dem Basisbrillenglas (1) und der dünnen Struktur (2) gegenüberliegt, wobei die Rille dafür ausgelegt ist, einen Haltedraht des Brillenglases in einer offenen Aufnahmeöffnung eines Brillengestells aufzunehmen.

12. Brillenglas nach einem der vorhergehenden Ansprüche, wobei die erste Fläche (10) des Basisbrillenglases (1) und wenigstens eine der Flächen (20, 21) der dünnen Struktur (2) mit Antireflexbeschichtungen (13, 23, 24) versehen sind.

13. Brillenglas nach einem der Ansprüche 1 bis 11, wobei die dünne Struktur (2) einen mehrschichtigen Aufbau in einer Richtung, die zu der ersten (20) und zweiten (21) Fläche der dünnen Struktur senkrecht ist, besitzt und wenigstens umfasst:
- einen Basisfilm (22);
- eine Schicht (25) von parallel zu der ersten und der zweiten Fläche der dünnen Struktur nebeneinander angeordneten Zellen (C), die von dem Basisfilm getragen wird;
- einen Film (28) zum Verschluss der Zellen, der sich auf einer dem Basisfilm gegenüberliegenden Seite der Schicht von Zellen befindet;
- eine erste Antireflexbeschichtung (24), die von dem Verschlussfilm auf einer der Schicht von Zellen gegenüberliegenden Seite getragen wird;
- einen zusätzlichen Film (29), der sich auf einer der Schicht von Zellen gegenüberliegenden Seite des Basisfilms befindet;
- eine zweite Antireflexbeschichtung (23), die von dem zusätzlichen Film auf einer dem Basisfilm gegenüberliegenden Seite getragen wird; und
- Verbindungsmittel (290), die den zusätzlichen Film mit dem Basisfilm auf einer der zweiten Antireflexbeschichtung gegenüberliegenden Seite des zusätzlichen Films verbinden.

14. Verfahren zur Herstellung eines Brillenglases, wobei dieses Brillenglas mit einem der vorhergehenden Ansprüche konform ist und das Verfahren die folgenden Schritte umfasst:
/1/ Erhalten einer Charakterisierung einer Form der Glasaufnahmeöffnung in einem Gestell, das dazu bestimmt ist, das Brillenglas aufzunehmen;
/2/ Zuschneiden des Basisbrillenglases (1) und Herstellen des Abstandshalters (30) entsprechend der Form der Aufnahmeöffnung des Gestells;
/3/ Zuschneiden der dünnen Struktur (2) entsprechend der Form der ersten Fläche des Basisglases (1);
/4/ Zusammenbauen des Abstandshalters (30) mit der dünnen Struktur unter Verwendung der zweiten Verbindungsmittel (32); anschließend
/5/ nach Schritt /4/, Zusammenbauen der die dünne Struktur (2) und den Abstandshalter (30) umfassenden Baugruppe mit dem Basisbrillenglas (1) unter Verwendung der ersten Verbindungsmittel (31).

15. Verfahren nach Anspruch 14, gemäß dem das Brillenglas mit Anspruch 4 konform ist und gemäß dem das Umfangsband (41) nach Schritt /4/ an die die dünne Struktur (2) und den Abstandshalter (30) umfassende Baugruppe angelegt wird.

16. Verfahren nach Anspruch 14, gemäß dem das Brillenglas mit Anspruch 5 konform ist und gemäß dem das Umfangsband (42) nach Schritt /5/ angelegt wird.

## Claims

1. Spectacle lens comprising:
- a rigid base spectacle lens (1) limited by a peripheral edge (12) laterally joining first and second opposite optical surfaces (10, 11) of said base spectacle lens;
- a thin structure (2) comprised between first and second parallel surfaces (20, 21) of said thin structure, and extending in front of the first surface (10) of the base spectacle lens (1), said thin structure (2) being a multilayer that is stacked in a direction that is perpendicular to the first surface (20) and second surface (21) of said thin structure, said thin structure (2) comprising at least one layer (25) of cells (C) that are juxtaposed parallel to said first and second surfaces of the thin structure;
- and two films (26, 27);
**characterized in that** said two films (26, 27) are located on either side of the layer of cells in said perpendicular direction,
and **in that** the spectacle lens includes a spacer comprising:
- a central portion that extends along at least one portion of the peripheral edge (12) of the base spectacle lens (1) and that itself has a first bearing surface that is applied against the first surface (10) of the base spectacle lens (1) in the interior of the peripheral edge (12), and a second bearing surface that is applied against the first surface (20) of the thin structure (2), said first and second bearing surfaces of the spacer being opposite; and
- a peripheral portion that continually encircles, peripherally, the base spectacle lens and the thin structure, ensuring the retention of said lens and said thin structure,
the spacer having a constant thickness (e) between the first and second bearing surfaces, and
a separating volume defined by the spacer between the base spectacle lens (1) and the thin structure (2) containing a gaseous medium during a use of the spectacle lens by a wearer.

2. Spectacle lens according to Claim 1, wherein the spacer is composed of two separate parts: a central portion (30) and a peripheral portion (41, 42)

3. Spectacle lens according to Claim 2, wherein the central portion of the spacer (30) comprises a stack of at least two spacer units (30a, 30b), a direction of said stack joining the respective first surfaces (10, 20) of the base spectacle lens (1) and of the thin structure (2), spacer units that are successive along the stacking direction being joined to one another by additional binding means (30c).

4. Spectacle lens according to Claim 2, wherein the peripheral portion comprises a peripheral bead (41; 42) located straddling a peripheral limit of the thin structure (2) joining the first and second surfaces of said thin structure, and at least one portion of an external edge of the central portion of the spacer (30) joining the first and second bearing surfaces of said spacer.

5. Spectacle lens according to Claim 4, wherein the peripheral bead (42) is located straddling the peripheral limit of the thin structure (2), the external edge of the spacer (30) and at least one portion of the peripheral edge (12) of the base spectacle lens (1).

6. Spectacle lens according to Claim 1, wherein the spacer is formed by a single part (30) of complex shape and wherein the first assembling means (31) comprise a first flange of the spacer (30) penetrating into a furrow of the base spectacle lens (1) located on the peripheral edge (12) of said base spectacle lens.

7. Spectacle lens according to Claim 6, wherein the second assembling means (32) form a fixed material link between the second bearing surface of the spacer (30) and the first surface (20) of the thin structure (2).

8. Spectacle lens according to Claim 7, wherein the spacer (30) possesses a cross-sectional profile with a corner (A) that is recessed with respect to the second bearing surface of said spacer, suitable for receiving a peripheral limit of the thin structure (2).

9. Spectacle lens according to Claim 6, wherein the second assembling means (32) comprise a second flange of the spacer (30) projecting onto the second surface (21) of the thin structure (2), so that said thin structure is inserted between the second bearing surface and the second the flange of the spacer.

10. Spectacle lens according to any one of Claims 6 to 9, wherein the spacer (30) furthermore possesses a relief (33) protruding from an external edge of said spacer opposite to the base spectacle lens (1) and to the thin structure (2), said protruding relief being suitable for penetrating into a groove of a rim of a spectacle-frame housing.

11. Spectacle lens according to any one of Claims 6 to 9, wherein the spacer (30) furthermore possesses a furrow (34) on an external edge of said spacer opposite to the base spectacle lens (1) and to the thin structure (2), said furrow being suitable for receiving a wire for maintaining the spectacle lens in an open spectacle-frame housing.

12. Spectacle lens according to any one of the preceding claims, wherein the first surface (10) of the base spectacle lens (1) and at least one of the surfaces (20, 21) of the thin structure (2) are provided with antireflection coatings (13, 23, 24).

13. Spectacle lens according to any one of Claims 1 to 11, wherein the thin structure (2) is a multilayer stacked in a direction that is perpendicular to the first surface (20) and second surface (21) of said thin structure, and comprises at least:
- a base film (22);
- a layer (25) of cells (C) that are juxtaposed parallel to said first and second surfaces of the thin structure, said layer being borne by the base film;
- a film (28) for closing the cells, said film being located on a side of the layer of cells that is opposite to the base film;
- a first antireflection coating (24) borne by the closing film on a side opposite to the layer of cells;
- an additional film (29) located on a side of the base film opposite to the layer of cells;
- a second antireflection coating (23) borne by the additional film on a side opposite to the base film; and
- binding means (290) joining the additional film to the base film on a side of said additional film opposite the second antireflection coating.

14. Process for producing a spectacle lens, said spectacle lens being according to any one of the preceding claims, and said process comprising the following steps:
/1/ obtaining a characterization of a lens-housing shape in a frame intended to receive said spectacle lens;
/2/ edging the base spectacle lens (1) and producing the spacer (30) in accordance with the housing of the frame;
/3/ cutting the thin structure (2) in accordance with the first surface of the base lens (1);
/4/ using the second assembling means (32) to assemble the spacer (30) with the thin structure (2); then
/5/ after step /4/, using the first assembling means (31) to assemble the assembly comprising the thin structure (2) and the spacer (30) with the base spectacle lens (1).

15. Process according to Claim 14, wherein the spectacle lens is according to Claim 4, and wherein the peripheral bead (41) is applied to the assembly comprising the thin structure (2) and the spacer (30) after step /4/.

16. Process according to Claim 14, wherein the spectacle lens is according to Claim 5, and wherein the peripheral bead (42) is applied after step /5/.
